(19) Europäisches Patentamt
European Patent Office
Office européen des brevets

(11) Publication number : **0 476 901 A2**

# (12) EUROPEAN PATENT APPLICATION

(21) Application number : **91308210.3**

(22) Date of filing : **09.09.91**

(51) Int. Cl.⁵ : **C01B 33/34**

(30) Priority : **10.09.90 GB 9019740**

(43) Date of publication of application :
**25.03.92 Bulletin 92/13**

(84) Designated Contracting States :
**AT BE CH DE DK ES FR GB GR IT LI NL SE**

(71) Applicant : **JOSEPH CROSFIELD & SONS LTD.
P O Box 26, Bank Quay
Warrington, Cheshire, WA5 1AB (GB)**

(72) Inventor : **Araya, Abraham
53 Friar's Close, Bebington
Wirral, Merseyside L63 3JW (GB)**
Inventor : **Creeth, Andrew Martin
239 Hoole Lane
Chester CH2 3EP (GB)**

(74) Representative : **Coleiro, Raymond et al
MEWBURN ELLIS 2 Cursitor Street
London EC4A 1BQ (GB)**

(54) **Zeolites.**

(57)    A zeolite has a free aperture main channel of a size $> 2.2\text{Å}$, a Si/Al molar ratio $< 124/1$ and zinc in the framework structure. Preferably the Si/Al molar ratio $\geq 1/1$. It is prepared by reacting together at least a source of silicon, a source of aluminium, a source of zinc, a source of alkali metal ions and a source of hydroxyl ions. Alternatively, it is prepared by reacting a zeolite having a main channel of a size $> 2.2\text{Å}$ and a Si/Al molar ratio $< 124/1$ with a compound capable of removing aluminium or silicon from the framework structure and providing zinc ions for introduction into the framework structure in plane of the aluminiun or silicon.

EP 0 476 901 A2

This invention relates to zeolites containing zinc in their framework structure, their preparation, their use as catalysts, ion exchangers, molecular sieves and adsorbents and to catalyst compositions containing them for use in hydrocarbon conversion, especially in FCC processing.

It is well-known that zeolites find extensive use as ion exchangers, molecular sieves, adsorbents and catalysts.

Thus, they can be provided with selected ions for exchange with others. It would be desirable to provide zeolites having an increased ion exchange capacity.

Zeolites may also be chosen, in dependence upon their particular pore structure and chemical composition, for absorbing a particular compound from a mixture in preference to others. Thus, it would be desirable to provide alternative zeolites whose morphology and composition will allow them to selectively absorb different compounds or more effectively to absorb a particular compound.

Similarly, it would be desirable to provide zeolites having a greater adsorptive capacity in a particular adsorption process.

The chemical processing industry is always looking for new zeolite catalysts which will change the composition of the final product and/or allow greater efficiency of production.

In particular, the acid properties of zeolites have been widely utilised in the production of gasoline by the cracking of oil fractions, particularly of gas oil, using FCC technology.

Typically, in FCC technology, wide-pore zeolites having the faujastic structure (X or Y zeolites) have been employed but improvements have been achieved by including in the catalyst composition other additional zeolites, including medium pore zeolites of the MFI family, or by adding molecular sieves based on $AlO_4$, $PO_4$ and $SiO_4$ tetrahedra (eg SAPO-37). Various modifications of zeolite Y, including ion-exchange, hydrothermal treatment, variation in the nature of the starting materials from which the zeolite is prepared and post-synthesis chemical treatments have provided improved catalysts.

It is known that the incorporation of elements additional to or in place of the Si and Al in the zeolite structure will change their behaviour on use as a catalyst.

EP-A-0428506 describes the use of small amounts of a metal cation M″, for example, zinc, as a template in the preparation of zeolite L for use in catalysis. It is mentioned that some cations M″ cannot be completely replaced by ion exchange, indicating that some such cations are in non-exchangeable sites in the zeolite L structure. Thus, it appears that some of the cations, although retaining their cationic form, ie free from the crystal framework, are trapped by the framework cage so as to be non-exchangeable.

In the past, several attempts have been made, for example, to replace some of the framework Al by Si, or to include other metals such as Ga or Zn in the framework structure of certain zeolitic materials.

Thus, Bond et al, J. Chem. Soc., Chem. Commun. (1985), 1056-1057, describe the preparation of a zinc containing analogue of an aluminophosphate molecular sieve known as ALPO-5. Although this might be described as a zeolitic material, it is to be noted that such compounds contain no Si.

EP-A-0158975 discloses crystalline "ZnAPSO" molecular sieves having three-dimensional microporous structures of $ZnO_2$, $AlO_2$, $SiO_2$ and $PO_2$ tetrahedral units. On an anhydrous the chemical constitution may be represented empirically by $mR:(Zn_wAl_wP_ySi_z)O_2$, wherein R is an organic template present in the intracrystalline pore system in a fractional molar amount m and the Zn, Al, P and Si are present in respective fractional molar amounts w, x, y and z. The value of m is up to about 0.3 and each of w, x, y and z is at least 0.01. In all compounds exemplified, the Si/Al molar ratio in the final product is considerably less than 0.5/1.

Likewise it is known to incorporate zinc into the framework structure of the zeolites which have the MFI type structure which contain little or no Al. Thus, US-A-4670617 describes the preparation, by direct synthesis, of an MFI structure containing zinc, for use as a molecular sieve, by mixing an organic base (such as ethylenediamine), a source of zinc (for example zinc oxide), an oxide of silica (such as a colloidal silica), and an organic template compound (for example a tetra-alkyl ammonium compound) in water. The resultant product contains no aluminium.

Similarly, Ball et al, Proceedings of the 7th International Zeolite Conference in "Studies in Surface Science and Catalysis" No. 28, Ed. Murakami et al, Elsevier, Amsterdam (1986), pages 951-956, describe the preparation, again by direct synthesis, of MFI zeolites in which Zn is incorporated into the framework structure. Again, these zeolites contain, at most, only a small amount of Al. For example, the MFI (Al 124, Zn 25) disclosed in Ball et al has, in the entire zeolite, a Si/Al ratio as high as 124, so presumably the respective amounts in the framework structure are of similar proportions.

In such low Al content zeolites, there is very little competition between the Al and the Zn for sites in the structure. Accordingly it is possible to incorporate zinc into such structures.

JP-A-63-123809 describes the preparation of activated zeolites by introducing certain metal elements (zinc being one of some 19 metals of vastly different sizes and properties given by way of example) into the crystal lattice and then contacting the zeolite with a compound having a sulphone group so as to introduce the sulphone into the zeolite. In the only Examples, zirconium is introduced into the zeolite in the absence of aluminium (Examples 1-5) and iron is introduced in the presence of aluminium (Example 6). It seems likely that, especially for aluminium containing zeolites, reference to the introduction of the metal "into the crystal lattice" means that the metal is merely introduced into the pores defined by the lattice; it does not suggest that the metal is present in the framework itself. Thus, many of the ions of the metals mentioned are of incorrect charge, coordination requirement (ie that they form tetrahedra) or size to be present in the framework structure at least at the level exemplified, especially when competing with aluminium for available sites.

In particular, JP-A-63-123809 gives no detail, for example, of XRD, from which the structure can be determined. However, according to Lok et al, Zeolites, (183), 3, 282, zeolites prepared using morpholine as template, as exemplified by JP-A-63-123809, are of the ZSM-5 type. For such zeolites, according to Ball, supra, incorporation of at least zinc into the framework structure would be very difficult, it being necessary, for achieving a Si/Zn ratio even as low as 25 for the Si/Al ratio to be as high as 124.

It is also known to form zincosilicate structures, such as $Na_2ZnSiO_4$, and zincoaluminosilicate structures which are not zeolites, but do contain small pores. Thus, it seems that there is a natural tendency for direct synthesis of such zinc containing materials from the usual starting materials such as respective sources of silica, zinc, aluminium, and alkali metal, alkaline earth metal or ammonium ions and, when present, tetramethyl ammonium ions, to lead to the formation of small pore materials. In particular JP-A-1-122916 describes the preparation of small pore zincoaluminosilicate materials. These materials, which are of the so-called sodalite type structure, are, strictly speaking, not zeolites (though they are referred to as such in JP-A-1-122916). Although they have a framework with a microporous structure (albeit with particularly small pores), and therefore have some properties similar to zeolites, they are in fact feldspathoids.

However, the pore sizes of such zincosilicate and zincoaluminosilicate structures are too small for practical use in the fields in which zeolites are normally employed, for example, ion exchange, adsorption, molecular separation and catalysis. Thus, a striking difference between sodalites and zeolites can be seen by comparing the aperture sizes of the main channels (which can be measured by X-ray diffraction) or the kinetic diameter (which is a value estimated from the maximum size of molecules adsorbed into the zeolite at a relatively rapid rate). For sodalites, there are no channels other than those which pass directly through the sodalite cage, and thus the aperture size is much smaller than for zeolites.

The following table amply illustrates this.

| Zeolite | Free aperture of main channels(Å) | Kinetic diameter (Å) |
|---|---|---|
| Sodalite | 2.2 | |
| Faujasite | 7.4 | 8.1 |
| P | 3.5 | 2.6 |
| Offretite | 3.6 x 5.2 and 6.4* | 6.0 |

* Offretite has two sets of main channels.

Furthermore, from a comparison of Examples 1 and 4 of JP-A-1-122916, it can be seen that, even for such small pore materials, where the amount of Al in the material is somewhat higher, then the amount of Zn in the framework structure is vastly reduced.

Surprisingly, we have found that it is possible to incorporate significant levels of Zn into zeolite framework structures which are (a) medium or large pore zeolites and yet (b) have low Si/Al ratios.

According to one aspect, the invention provides a zeolite having (a) a main channel free aperture of a size greater than 2.2Å, (b) a Si/Al molar ratio < 124/1, (c) zinc in the framework structure and (d) less than 0.01 mole % of phosphorus in the framework structure.

According to another aspect, the invention provides a zeolite having (a) a main channel free aperture of a size greater than 2.2Å (b) a Si/Al molar ratio $\geq$ 1/1 and < 124/1, and (c) zinc in the framework structure.

3

Usually, the free aperture main channel size is $\geqq$ 2.3Å, more often $\geqq$ 2.4Å, and for many end uses $\geqq$ 2.5Å.

As a rough guide to the free aperture main channel size, it is possible to measure kinetic diameter as explained above. However, since one or both of the main channel and the molecules absorbed may not be truly circular, this value may be slightly above or below the true free aperture main channel size.

The Si/Al ratio is preferably $\leqq$ 50/1, more preferably $\leqq$ 10/1, most preferably $\leqq$ 5/1.

Furthermore, the Si/Al ratio is preferably $\geqq$ 0.5/1, more preferably $\geqq$ 1/1, especially $\geqq$ 1.05/1, and may be $\geqq$ 2/1.

In a preferred zinc containing zeolite in accordance with the invention at least 0.1 molar %, more preferably at least 0.5 molar %, of the tetrahedrally coordinated atoms in the framework are zinc.

Zeolites into the framework structure of which zinc may be incorporated may be natural or synthetic in origin. Suitable examples are listed in D W Breck, "Zeolite Molecular Sieves", Krieger, Malabar, Florida, 1974 and J V Smith, "Topochemistry of Zeolites and Related Materials, I. Topology and Geometry", Chem. Rev., (1988), 88, 149-182.

The zeolites may be subjected additionally to ammonium and then metal ion exchange and may include other elements in the framework structure such as boron, gallium, germanium, chromium and iron. Furthermore, the zeolites may be modified, for example by ion exchange, impregnation, hydrothermal or chemical treatments.

Typical zeolites are the faujasite zeolites (especially zeolite Y), offretite and zeolite P.

The zinc may be incorporated into the framework structure either by direct synthesis from starting materials including a source of zinc, or by isomorphous substitution (secondary synthesis) in which either Al or Si in the framework structure is replaced by Zn.

Thus, according to another aspect of the invention there is provided a method of preparing, by direct synthesis, a zeolite having (i) zinc in the framework structure, (ii) a free aperture main channel of a size > 2.2Å and (iii) (1) a Si/Al molar ratio $\geqq$ 1/1 and < 124/1 or (2) a Si/Al molar ratio < 124/1 and having less than 0.01 mole % phosphorus in the framework structure, which method comprises reacting together at least a source of silicon, a source of aluminium, a source of zinc, a source of alkali metal ions, and optionally a structure directing agent.

The structure directing agent may be a compound capable of providing tetraalkylammonium ions, especially tetramethylammonium ions.

Typical synthesis components providing the above sources are described in D W Breck, supra and R Szostak, "Molecular Sieves: Principles of Synthesis and Identification", Van Nostrand Reinhold, New York, 1989.

However, components which are especially suitable for providing the various sources are:

**Silica:** sodium silicate, colloidal silica, amorphous silica

**Alumina:** aluminium oxide (especially an alumina sol), psuedomboehmite, sodium aluminate, aluminium hydroxide, aluminium sulphate and other aluminium salts

**Zinc:** the oxide, halide, especially chloride, sulphate and nitrate

**Alkaki metal ions:** neutral salts and hyroxides

**Tetramethylammonium ions:** the halides and hydroxide.

In general, a range of synthetic compositions which would lead, for example, to a faujasite, offretite or P structure is

| | |
|---|---|
| $SiO_2/Al_2O_3$ | - 1-100, preferably 1.5-40 |
| $SiO_2/ZnO$ | - 2-500, preferably 4-250 |
| $SiO_2/M_2O$ | - 0.2-10, preferably 0.3-3 |
| $H_2O/SiO_2$ | - 5-200, preferably 10-100 |
| $OH^-/SiO_2$ | - 0.2-10, preferably 0.4-5 |
| $OH^-/H_2O$ | - 0.01-0.5, preferably 0.02-0.2 |

wherein M is at least one alkali metal ion.

For faujasite and zeolite P, M is usually Na, while for offretite M is usually a mixture of Na and K.

Additionally, for the preparation of Zn-offretite, it is preferred additionally to include, in the starting mixture, a structure directing agent such as a compound capable of providing alkylammonium cations, for example, tetramethylammonium chloride, generally to provide the following proportion

$SiO_2/TMA^+$ - up to 50, preferably 2-40, more preferably 5-25, especially 8-15.

A method of carrying out the above direct synthesis procedure which is particularly suitable for the preparation of zeolite Zn-Y and Zn-offretite is firstly to prepare, as a source of zinc and alkali metal ions, a zincate solution by dissolving zinc oxide in a strongly alkaline solution such as a 10-75%, preferably 50%, by weight NaOH (Zn-Y) or NaOH/KOH (Zn-offretite) solution, and then admixing the resultant solution with sodium aluminate as the source of aluminium and a small particle size colloidal silica as the source of silicon.

For faujasite Zn-Y, after formation of a gel by the above reaction, it is preferably aged, which ageing may be carried out at 10-30°C, usually room temperature, for a period of from 12-96 hours, more preferably 24-48 hours. After ageing the gel, still in a container, is preferably placed in an oven for a period of from 1-14 days, more preferably 3-8 days, at a temperature of 50-150°C, more preferably 70-120°C, especially 85-100°C.

For the preparation of Zn-offretite, it is preferred to adopt a method similar to the above but additionally to include, in the starting mixture, the structure directing agent.

For Zn-offretite, it is preferred, immediately after formation of the gel (ie without first ageing), to place the gel (still in a container) in an oven for a period of 1-14 days, more preferably 3-8 days at a temperature of 50°-150°C, more preferably 70-120°C, especially 85-100°C.

A preferred method for the direct synthesis of zeolite Zn-P comprises again preparing a zincate salt by dissolution of zinc oxide in a strongly alkaline solution such as a 10-75%, preferably 50%, by weight NaOH solution, and thereafter adding to the alkaline solution sodium aluminate and sodium silicate as respective sources of aluminium and silicon.

For zeolite Zn-P, after admixture of the reactants, the mixture is preferably heated with stirring for a period of 1-10 hours at a temperature of 50-150°C, more preferably 70-120°C, especially 85-100°C.

Whichever of the above methods is adopted, in preferred procedures, the reactants for the preparation of faujasite, zeolite P and offretite containing zinc in the framework structure are used in amounts such that, in the reaction, the following ranges of proportions are present.

a) Faujasite

| | |
|---|---|
| $SiO_2/Al_2O_3$ | 2-20 |
| $SiO_2/ZnO$ | 10-100 |
| $SiO_2/Na_2O$ | 1-2.5 |
| $H_2O/SiO_2$ | 8-30 |
| $OH^-/SiO_2$ | 0.2-1 |
| $OH^-/H_2O$ | 0.02-0.1 |

b) Zeolite P

| | |
|---|---|
| $SiO_2/Al_2O_3$ | 1.5-5 |
| $SiO_2/ZnO$ | 4-200 |
| $SiO_2/Na_2O$ | 0.3-1 |
| $H_2O/SiO_2$ | 35-150, more preferably 50-100 |
| $OH^-/SiO_2$ | 2-5 |
| $OH^-/H_2O$ | 0.05-0.2 |
| $Na_2O/K_2O$ | 1.5-6 |
| $H_2O/SiO_2$ | 8-30 |
| $OH^-/SiO_2$ | 0.5-2 |
| $OH^-/H_2O$ | 0.03-1.2 |
| $SiO_2/TMA^+$ | 5-25, more preferably 8-15. |

As mentioned above, as an alternative to direct synthesis, zinc may be introduced into the framework of the zeolite by isomorphous substitution (secondary synthesis) referred to hereinafter as "post-synthesis modification".

Thus, yet another aspect of the invention provides a method of preparing a zeolite having a free aperture main channel of a size > 2.2Å, a Si/Al ratio < 124/1 and zinc in the framework structure which comprises reacting a zeolite having a free aperture main channel of a size > 2.2Å and a Si/Al ratio < 124/1 with a compound capable of removing aluminium or silicon from the framework structure and providing zinc ions for introduction of zinc into the framework structure in place of the aluminium or silicon.

This method can be carried out by reacting the zeolite with any material capable of removing Al or Si from the framework structure and substituting, in its place, Zn atoms.

Such a material is, for example, a zinc complex such as ammonium hexafluorozincate, which removes Al from and substitutes zinc into the framework structure.

However, a particularly preferred material is an alkali metal zincate, especially sodium zincate, which removes Si from and substitutes zinc into the framework structure.

In an especially preferred method of post-modification synthesis, the zeolite is suspended in a strongly alkaline solution of the zincate, especially sodium zincate.

Preferably the $OH^-$ concentration of the alkaline solution is at least 0.1M, more preferably 0.1-10M, especially a 0.5-5M, typically 1-4M.

In order to achieve a significant degree of substitution, it is necessary to stir the suspension at a temperature of at least 80°C, preferably at least 90°C for at least three, more preferably at least five, hours.

Whichever method is adopted, it is permissible to include, in the reaction mixture or subsequent to the reaction, a larger amount of zinc than that which will go into the framework structure. This excess zinc will, under alkaline conditions, be in anionic form, tetrahedrally coordinated with hydroxyl groups outside the framework structure, but may be within the crystal lattice.

Furthermore, it is also permissible to modify the zeolite, for example, by ion exchange with cations. Where the ions to be introduced are zinc, these will then be in an octahedrally coordinated form.

It is especially surprising to us that, using methods embodying the invention, we were able to incorporate zinc into the framework structure, especially to such high levels as those exemplified below.

As mentioned above, there have been previous reports of the incorporation of the zinc into the framework structure of certain zeolites. However, in most cases, confirmation that the zeolite had entered the framework structure was not clearly provided (though JP-A-1-122916 does to some extent give an indication that zinc has been incorporated into sodalite type structures).

It is in fact impossible to prove directly that Zn had been inserted into the framework structure, but we have adopted five independent tests which together provide extremely strong evidence of this, namely

(a) measurement of unit cell size,

(b) NMR,

(c) IR,

(d) extended X-ray absorption fine structure (EXAFS), and

(e) chemical stability

These methods of measurement are illustrated in more detail below.

The invention will now be described in more detail with reference to the accompanying drawing and Examples.

In the drawing,

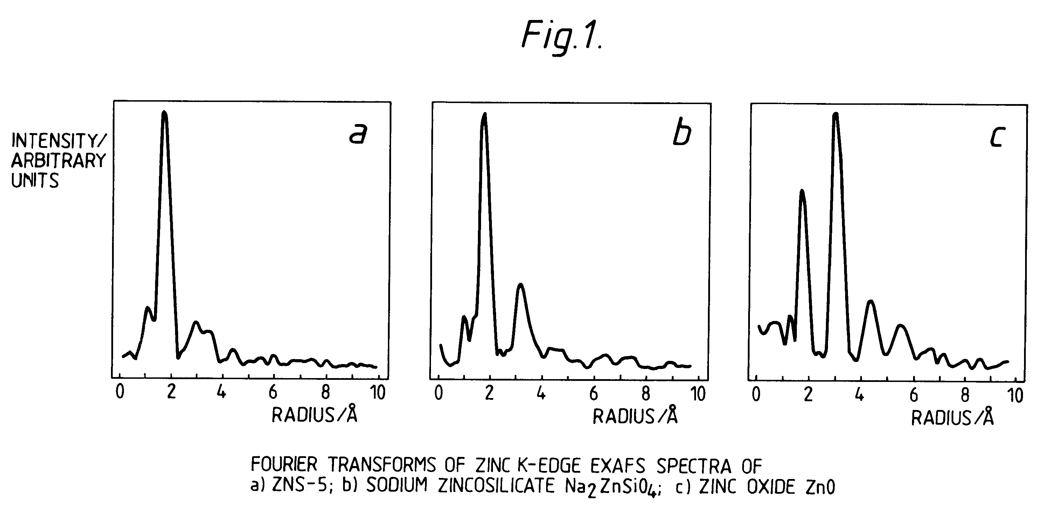

Fig. 1 shows fourier transforms of zinc K-edge EXAFS spectra of a) ZNS-5, b) sodium zincosilicate ($Na_2ZnSiO_4$), and c) zinc oxide (ZnO); see "Location of Zinc Species", item (d).

In the Examples,

Examples 1-4 illustrate methods of direct synthesis of zeolites embodying the invention,

Example 5 illustrates a post-synthesis modification process in accordance with the invention, and

Example 6 illustrates the various methods for determining the location of zinc within a faujasite zeolite embodying the invention.

SYNTHESIS

Example 1

Zeolite Zn-Faujasite prepared from a Ludox silica source: ZNS-50

A solution of 1.1g of zinc oxide (BDH AnalaR) dissolved in 7.5g sodium hydroxide (BDH AnalaR) and 7.8g water was diluted with 50.7g water, and 15.4g sodium aluminate solution (Laporte; 20% $Al_2O_3$, 20% $Na_2O$ by weight) was then added. The mixture was poured quickly into a polypropylene bottle containing 48.5g of Ludox™ HS 40 silica (40% $SiO_2$, 0.43% $Na_2O$), a fine particle size colloidal silica. The gel was shaken vigorously then aged (allowed to stand) for 24 hours. After ageing, the bottle was placed in an oven at 95°C for 7 days. The crystalline product was filtered and washed twice by resuspension in water followed by filtration. The solid was placed in an oven at 95°C overnight to dry. The yield was 15.6g. Other syntheses were performed in a similar manner, and the gel compositions of this and the other syntheses are given below. Compositions of the products are also shown below. In this and all product composition Tables, the errors in the sodium values are larger, due to Zn-XRF line overlap.

Synthesis Compositions (in terms of the mole ratios of the oxides)

x Al$_2$ O$_3$ : 10 SiO$_2$ : y ZnO : z Na$_2$O : 160 H$_2$O

| Zeolite Faujasite | x | y | z |
|---|---|---|---|
| ZNS-5 | 0.9 | 0.2 | 5.9 |
| ZNS-50 | 0.9 | 0.4 | 4.4 |
| ZNS-51 | 0.9 | 0.2 | 4.3 |

Composition of Products (in terms of the mole ratios of the elements).

| Zeolite Faujasite | Al | Si | Zn | Na | %Zn[1] | Si/Zn |
|---|---|---|---|---|---|---|
| ZNS-5 | 1 | 1.76 | 0.05 | 1.06 | 1.8 | 35.2 |
| ZNS-50 | 1 | 2.44 | 0.18 | 1.27 | 5.0 | 13.5 |
| ZNS-51 | 1 | 2.04 | 0.08 | 1.08 | 2.6 | 25.5 |

Note 1 - % Zn = [Zn/(Zn+Al+Si)] x 100%

### Example 2

### Zeolite Zn-Faujasite prepared from sodium silicate as the silica source

#### a) Synthesis of Control zeolite Y

258g of sodium silicate solution (28.9% $SiO_2$, 8.6% $Na_2O$) was mixed with water in a 750ml flanged flask. To the mixture, 75g of a seed of the type described in US-A-3671191 followed by 54g of sodium aluminate solution (16.4% $Na_2O$, 19% $Al_2O_3$) were added. Finally 114g of aluminium sulphate solution (6.9% $Al_2O_3$) was added. The whole mixture was stirred for 1 hour and allowed to react at 95°C for 40 hours. At the end of the reaction the product was filtered, washed and dried at 105°C for 16 hours.

The product from this Example 2 (a) was crystalline zeolite Y with a unit cell size of 24.67A and bulk Si/Al ratio (XRF) of 2.46. Framework Si/Al ratio of the product by NMR was 2.5.

#### b) Synthesis of Zinc containing zeolite Y

This was carried out in the same manner as described in (a) above, except that an additional 11.7g of $Zn(NO_3)_2.6H_2O$ was added to the above 114g aluminium sulphate solution.

The product from this Example 2(b) was crystalline zeolite Zn-Y and contained 3.2% ZnO with a unit cell size of 24.66Å and bulk Si/Al ratio of 2.86. Framework Si/Al ratio obtained by NMR was 2.9. A zeolite Y sample with framework Si/Al ratio of ~ 2.9 should have a unit cell size of 24.58-24.60Å. The fact that the zinc containing Y with Si/Al of ~ 2.9 has a unit cell size of 24.66Å, ie very close to that of the control Y, is an indication that zinc is in the framework structure.

The compositions of the products (a) and (b), in terms of mole ratios of the elements are as follows:

|  | Al | Si | Zn | Na | %Zn[1] | Si/Zn |
|---|---|---|---|---|---|---|
| (a) Control zeolite Y | 1 | 2.46 | - | 0.98 | - | - |
| (b) Zeolite Zn-Y | | 1 | 2.86 | 0.10 | 0.94 | 2.5 | 28.6 |

Note 1 - % Zn = [Zn/(Zn+Al+Si)] x 100 %

Example 3

Zeolite Zn-Offretite : ZNS-47

Zinc oxide (0.19g) was dissolved in a solution of 8.25g sodium hydroxide and 4.22g potassium hydroxide in 12.5g water and diluted with 21.5g water. Meanwhile 2.74g tetramethylammonium chloride (BDH Laboratory Reagent) was dissolved in an equal weight of water. This was added to the zincate followed by 4.79g of sodium aluminate. The mixture was poured quickly into 40.81g of Ludox™ HS40 and 15.24g water and the resulting gel shaken vigorously. The mixture was placed in an oven at 95°C for 7 days, then filtered and dried as for zeolite Y. The yield was 5.0g. The gel synthesis compositions of this and further syntheses are given below. The compositions of the resulting products are also given below.

Synthesis Compositions

x Al$_2$O$_3$ : 27 SiO$_2$ : y ZnO : 11 Na$_2$O : 3.8 K$_2$O : 2.4 TMACℓ : 430 H$_2$O

| Zeolite Offretite | x | y |
|---|---|---|
| ZNS-39 (comparative) | 1 | 0 |
| ZNS-47 | 0.91 | 0.22 |
| ZNS-48 | 0.89 | 0.4 |

Composition of Products

| Offretite | Al | Si | Zn | Na | K | %Zn[1] | Si/Zn |
|---|---|---|---|---|---|---|---|
| ZNS-39 | 1 | 3.06 | - | - | 0.46 | - | - |
| ZNS-47 | 1 | 2.72 | 0.04 | 0.43 | 0.48 | 1.1 | 68.0 |
| ZNS-48 | 1 | 2.92 | 0.10 | 0.47 | 0.56 | 2.5 | 29.2 |

Note 1 - % Zn = [Zn/(Zn+Al+Si)] x 100%

Example 4

Zeolite Zn-P : ZNS-55

1.14g zinc oxide was dissolved in 10.45g sodium hydroxide and 10.4g water. This was added to 33.94g sodium aluminate solution in 87g water in a baffled glass beaker (1 litre). 37.8g sodium silicate solution (BDH, 30% $SiO_2$, 12% $Na_2O$) in 97g $H_2O$ was added with stirring by means of a disc-turbine stirrer. The mixture was warmed and stirring continued. The temperature was maintained at 90-95°C for $5\frac{1}{2}$ hours, then the solid treated as previously. The yield was 25.2g. The gel synthesis compositions, in mole ratios of the oxides, of this and other syntheses are given below. The compositions of the resulting products, in terms of mole ratios of the elements, are also given below.

Synthesis Compositons

Zeolite P $H_2O/SiO_2$ = 70

|  | $Al_2O_3$ | ZnO | $SiO_2$ | $Na_2O$ |
|---|---|---|---|---|
| ZNS-P (comparative) | 1 | – | 2.7 | 4.3 |
| ZNS-30 | 1 | 0.1 | 2.7 | 4.4 |
| ZNS-32 | 1 | 0.106 | 2.84 | 4.5 |
| ZNS-54 | 1 | 0.4 | 2.86 | 4.9 |
| ZNS-55 | 1 | 0.22 | 2.86 | 4.7 |
| ZNS-67 | 1 | 0.106 | 2 | 4.8 |
| ZNS-69 | 1 | 0.42 | 2 | 5.2 |
| ZNS-71 | 1 | 0.4 | 2.84 | 4.9 |
| ZNS-72 | 1 | 0.4 | 2.6 | 5.0 |

Composition of Products

| Zeolite P | Al | Si | Zn | Na | %Zn[1] | Si/Zn |
|-----------|----|------|-------|------|------|-------|
| ZNS-P | 1 | 1.35 | – | 1.00 | – | – |
| ZNS-30 | 1 | 1.21 | 0.03 | 1.05 | 1.3 | 40.3 |
| ZNS-32 | 1 | 1.25 | 0.03 | 1.00 | 1.3 | 41.7 |
| ZNS-54 | 1 | 1.35 | 0.11 | 1.08 | 4.5 | 12.3 |
| ZNS-55 | 1 | 1.29 | 0.063 | 1.03 | 2.7 | 20.5 |
| ZNS-67 | 1 | 1.06 | 0.007 | 0.92 | 0.3 | 151.4 |
| ZNS-69 | 1 | 1.06 | 0.019 | 0.95 | 0.9 | 55.8 |
| ZNS-71 | 1 | 1.34 | 0.10 | 1.14 | 4.1 | 13.4 |
| ZNS-72 | 1 | 1.24 | 0.076 | 1.11 | 3.3 | 16.3 |

Notes

1. % Zn = [Zn/(Zn+Al+Si)] x 100%

Example 5

Post-synthesis Modification

This secondary synthesis method was carried out on each of a zeolite X, a zeolite Y, a zeolite P and offretite. The method was to suspend 5g zeolite in 250cm³ of a solution containing 0.2M zinc oxide and 2M sodium hydroxide. In a mild treatment the mixture was placed in a bath at 70°C for 2 hours; a harsher one involved stirring the suspension at 90-95°C for 5-6 hours. The products were filtered, washed with 0.25M sodium hydroxide to remove excess zincate, then washed with water and dried. The conditions used and zeolites treated are given below.

Post synthesis modification of Example 5

Samples not containing zinc (used as starting materials for post synthesis modification to ZNS-38 and ZNS-39) have the following synthesis compositions:

ZNS-38 $Al_2O_3$ : 4 $SiO_2$ : 5.65 $Na_2O$ : 85 $H_2O$
ZNS-39 $Al_2O_3$ : 27 $SiO_2$ : 11 $Na_2O$ : 3.8 $K_2O$
    : 2.4 TMAC$\ell$ : 430 $H_2O$
The reaction conditions were as follows:

|                   | Method A          | Method B          |
|-------------------|-------------------|-------------------|
| Starting zeolite  | 70°C, 2 hours     | 95°C, 5 hours     |
| Linde 13 X        | ZNS-36            | ZNS-41            |
| Zeolite Y         | ZNS-37            | ZNS-42            |
| P (ZNS-38)        | ZNS-43            | ZNS-44            |
| Offretite (ZNS-39) | –                | ZNS-46            |

Method A is comparative and was included to show that relatively mild conditions will not serve to provide any significant framework substitution; see Example 6, test (e).

Composition of Products

|              | Al | Si   | Zn    | Na   | K    | %Zn[1] | Si/Zn |
|--------------|----|------|-------|------|------|--------|-------|
| Linde 13 X   | 1  | 1.25 | –     | 1.01 |      | –      | –     |
| ZNS-36       | 1  | 1.23 | 0.006 | 0.95 |      | 0.3    | 205.0 |
| ZNS-41       | 1  | 1.24 | 0.008 | 0.95 |      | 0.4    | 155.0 |
| Zeolite Y    | 1  | 2.44 | –     | 0.96 |      | –      | –     |
| ZNS-37       | 1  | 2.22 | 0.14  | 1.14 |      | 4.2    | 15.9  |
| ZNS-42       | 1  | 1.87 | 0.14  | 1.11 |      | 4.7    | 13.4  |
| P, ZNS-38    | 1  | 1.37 | –     | 0.99 |      | –      | –     |
| ZNS-43       | 1  | 1.33 | 0.03  | 0.96 |      | 1.3    | 44.3  |
| ZNS-44       | 1  | 1.30 | 0.03  | 0.97 |      | 1.3    | 43.3  |
| Offretite, ZNS-39 | 1 | 3.06 | –  | 0.39 | 0.46 | –      | –     |
| ZNS-46       | 1  | 2.71 | 0.04  | 0.59 | 0.23 | 1.1    | 67.8  |

Note 1 - % Zn = [Zn/(Zn+Al+Si)] x 100%

Example 6

LOCATION OF ZINC SPECIES IN A ZEOLITE FAUJASITE

a) Unit Cell Size Data

Samples were equilibrated over saturated ammonium chloride for at least 24 hours before measurement. The unit cell size (UCS) is related to the aluminium content. If zinc replaces aluminium in the framework, we would expect the UCS to increase. Furthermore, if zinc is present in the zeolite framework, the UCS will also be larger for a zeolite of a given Si/Al ratio.

Thus, we may compare ZNS-50 with a standard zeolite Y sample. Quite fortuitously, the Si/Al ratio is the same, ie 2.44, for both these solids, thus affording a particularly appropriate comparison.

|  | UCS/A | Si/Al | Zn/Al |
|---|---|---|---|
| Zeolite Y | 24.70 | 2.44 | - |
| ZNS-50 | 24.76 | 2.44 | 0.18 |

It can be seen that the ZNS-50 shows a substantial increase in UCS as compared with the control zeolite Y, this giving a clear indication that the zinc is located within the framework structure.

b) Nuclear Magnetic Resonsance - $^{29}$Si

This technique is sensitive to the framework composition of zeolites. However, it is insensitive to non-framework metal species. Thus, we are able to distinguish between framework and non-framework metal species. We may calculate the (Si/Al) framework mole ratio by nmr and compare it with that calculated by XRF. For zeolites containing zinc as well we may calculate a $(Si/Zn+Al)_{XRF}$ mole ratio for the total composition and a $(Si/non\ silicon)_{nmr}$ framework mole ratio. Thus, we may compare $(Si/Al)_{XRF}$ and $(Si/Al+Zn)_{XRF}$ with $(Si/non\ silicon)_{nmr}$ for the zeolite Y and ZNS-50 samples.

|  | $(Si/non\ Si)_{nmr}$ | $(Si/Al)_{XRF}$ | $(Si/Al+Zn)_{XRF}$ |
|---|---|---|---|
| Zeolite Y | 2.50 | 2.44 | - |
| ZNS-50 | 2.07 | 2.44 | 2.07 |

The $(Si/non\ Si)_{nmr}$ ratio compares well with the $(Si/Al+Zn)_{XRF}$ for ZNS-50, giving a strong indication that all of the zinc is in the framework.

c) Infra-red (IR)

Various peaks in the IR spectrum of zeolite Y are dependent on the framework composition. In particular the frequencies of two peaks vary linearly with aluminium content. An increase in aluminium content leads to a lower peak frequency. The addition of zinc to the framework is expected to reduce the frequency further as zinc is heavier than aluminium. Again we may compare Zeolite Y with ZNS-50.

|  | $(Si/Al)_{XRF}$ | $(Zn/Al)_{XRF}$ | $\nu_{1000}/cm^{-1}$ | $\nu_{585}/cm^{-1}$ |
|---|---|---|---|---|
| Zeolite Y | 2.44 | - | 1017 | 576 |
| ZNS-50 | 2.44 | 0.18 | 1004 | 573 |

The experimental error in determining the peak frequency in these FT experiments is $\pm\ 5\ cm^{-1}$ for the $\nu_{1000}$ peak and $\pm\ 1\ cm^{-1}$ for the $\nu_{585}$ peak. Substantial reductions in the frequencies of the peaks are shown by ZNS-50 as compared with the standard zeolite Y, again indicating that the zinc is in the framework.

d) EXAFS Spectra

EXAFS (Extended X-ray Absorption Fine Structure) spectra provide a useful complement to other techniques. In Fourier transform mode, it gives a picture of the local structure around a central atom of interest, as bond distances and coordination numbers of adjacent atoms can be calculated. The EXAFS of the zinc K-edge were obtained for ZNS-5, zinc oxide and the dense phase $Na_2ZnSiO_4$ (a zincosilicate with a non-zeolite structure) and the Fourier transforms are reproduced in Figure 1. The first point to note is that the large peak at 1.95Å corresponds to 4 oxygens coordinated to the zinc. Secondly, it can be seen clearly that the transforms are unlike each other. There is no sign in ZNS-5 of the strong zinc-zinc interactions found for ZnO which yield the intense peaks at larger radius. The second shell of ZNS-5 and $Na_2ZnSiO_4$ have different shapes in the FT. Thus the zinc found in ZNS-5 is not present as ZnO or $Na_2ZnSiO_4$. The FT pattern was fitted using a zinc-silicon in zeolite framework model with the result shown below.

|  | N | R(Å) | (a) |
|---|---|---|---|
| Zn-O | 4 | 1.94 | (0.010) |
| Zn-Si | 4 | 3.18 | (0.030) |
| Zn-Na | 4 | 3.57 | (0.021) |

Here N is the number of atoms of the type shown in the first column which are placed at a distance R from the central zinc with an uncertainty of a. Thus, we see that a model in which the zinc is placed in a tetrahedral silicate framework is consistent with the EXAFS.

e) Chemical Tests

Samples of zinc containing zeolites were washed with 0.25 M NaOH. If zinc were present in the framework relatively little zinc should be released into the solution. If zinc were located in the intracrystalline channels and pores it should be released with relative ease into solution. A comparison was made between ZNS-50, prepared by direct synthesis, and a sample prepared by post synthesis modification, ZNS-37 using the mild conditions set out in Method A. The unit cell size and nmr data for ZNS-37 suggested that zinc had not entered the framework, though XRF indicated a high level of zinc present in the solid. The test involved suspending 0.2g of zeolite in 20ml of 0.25 M NaOH and stirring for 10 minutes. The suspension was centrifuged and the supernatant anaylsed for zinc content.

$n_{aq}$ = number of moles of zinc released into the solution
$n_{sd}$ = total number of moles of zinc originally in mass of solid used

|  | $10^6\ n_{aq}$ | $10^6\ n_{sd}$ | $(n_{aq}/n_{sd})/\%$ |
|---|---|---|---|
| ZNS-50 | 8.3 | 144 | 5.8 |
| ZNS-37 | 41.4 | 121 | 34 |

It can be seen that ZNS-37 released a much greater proportion of its zinc when subjected to this treatment. These results imply that in ZNS-50, the zinc is located in the framework whereas in ZNS-37 the zinc is located within the intracrystalline channels.

CONCLUSIONS

It was previously considered that Al had a size which was especially suitable for incorporation with Si into a medium or large pore size zeolite structure so that, especially where large amounts of Al were present in such a structure, it would be difficult either to introduce into the framework the much larger Zn atoms or to prep-

EP 0 476 901 A2

are directly a corresponding structure in which the much larger Zn atoms were present in place of the Al.

Nevertheless, it might be expected that zeolite structures, such as the MFI structure, containing little or no Al might tolerate small amounts of Zn. Furthermore, it might also be expected that zeolite structures having small pores will allow zinc to be incorporated as they already resemble a conventional zincosilicate structure, such as $Na_2ZnSiO_4$. Thus, the sodalite structure might tolerate a certain amount of zinc.

However, we have found surprisingly that

(a) where the structure normally contained large quantities of Al, then even if the zeolite is a medium or wide-pore zeolite having a pore size $\geqq$ 2.4Å, such as zeolite P, offretite or faujasite zeolite, zinc could be incorporated into the framework structure, and

(b) the amounts of zinc incorporated were surprisingly large; we have managed to incorporate up to 5 mole % into the framework structure of zeolites having particularly low (<10) Si/Al ratios.

Furthermore, replacement of Al by Zn introduces an extra negative charge, and replacement of Si by Zn introduces two extra negative charges, each to be balanced by a cation. During direct synthesis, all of Si, Al and Zn compete with one another for the available sites and it would be expected that introduction of negative charges would be energetically difficult. However, as exemplified by experiment ZNS-69 in Example 4, this product has a high Al content and yet contains a significant amount of zinc. This was particularly surprising.

This means that for zeolites, such as zeolite P, offretite and the faujasitic zeolites, especially zeolite Y, which are important catalysts in hydrocarbon cracking processes, especially FCC technology, the amount of zinc in the framework structure can be controlled within certain amounts over a relatively wide range to modify as required the catalytic properties of the zeolite material. This is especially so for zeolite Y in FCC catalysis and offretite in a wide variety of catalytic processes.

Likewise, the performance of the zeolite, especially faujasite Y, offretite and zeolite P, as a molecular sieve and as an adsorbent can be modified.

Furthermore, it will be readily apparent that as the aluminium in a zeolite is replaced by zinc, so the ion exchange capacity of the zinc is increased, one extra univalent ion being provided for every aluminium ion replaced by zinc.

Finally, this control of the properties of the framework structure by incorporating in it a desired amount of zinc may lead to a wider variety of end uses for the resultant zeolite.

## Claims

1.  A zeolite having (a) a free aperture main channel of a size > 2.2Å, (b) a Si/Al molar ratio $\geqq$ 1/1 and < 124/1, and (c) zinc in the framework structure.

2.  A zeolite according to claim 1, wherein the free aperture main channel is of a size $\geqq$ 2.3Å.

3.  A zeolite according to claim 2, wherein the free aperture main channel is of a size $\geqq$ 2.4Å.

4.  A zeolite according to any preceding claim, wherein the Si/Al ratio is $\leqq$ 50/1.

5.  A zeolite according to claim 4, wherein the Si/Al ratio is $\leqq$ 10/1.

6.  A zeolite according to any preceding claim wherein the amount of zinc is at least 0.1 mole % of the tetrahedrally coordinated atoms in the framework.

7.  A zeolite according to claim 6, wherein the amount of zinc is at least 0.5 mole % of the atoms of the tetrahedrally coordinated atoms in the framework.

8.  A zeolite according to any preceding claim selected from faujasite., zeolite P and offretite structures.

9.  A zeolite selected from faujasite, zeolite P and offretite structures and having zinc in the framework structure.

10. A zeolite according to claim 9, wherein the faujasite structure is a zeolite Y.

11. A zeolite (a) having a free aperture main channel of a size > 2.2Å, (b) a Si/Al molar ratio < 124/1, (c) zinc in the framework structure and (d) less than 0.01 mole % of phosphorus in the framework structure.

14

12. A zeolite according to claim 11 in which phosphorus is absent from the framework structure.

13. A zeolite according to claim 10 or claim 11, wherein the Si/Al ratio is $\geqq$ 1/1.

14. A zeolite according to claim 13, wherein the Si/Al ratio is $\geqq$ 1.05/1.

15. A method of preparing a zeolite having a free aperture main channel of a size > 2.2Å, a Si/Al molar ratio $\geqq$ 1/1 and < 124/1 and zinc in the framework structure, which method comprises reacting together at least a source of silicon, a source of aluminium, a source of zinc, a source of alkali metal ions and a source of hydroxyl ions.

16. A method of preparing a zeolite having (a) a free aperture main channel of a size > 2.2Å, (b) a Si/Al molar ratio < 124/1, (c) zinc in the framework structure and (d) less than 0.01 mole % of phosphorus in the framework structure, which method comprises reacting together at least a source of silicon, a source of aluminium, a source of zinc, a source of alkali metal ions and a source of hydroxyl ions.

17. A method according to claim 15 or claim 16, which additionally includes reacting, with the said sources, a structure directing agent.

18. A method according to any one of claims 15 to 17, wherein the source of silicon is selected from sodium silicate, colloidal silica and amorphous silica.

19. A method according to any one of claims 15 to 18, wherein the source of aluminium is selected from pseudoboehmite, sodium aluminate, aluminium hydroxide, aluminium oxide and aluminium salts.

20. A method according to claim 19, wherein the aluminium oxide is in the form of an alumina sol.

21. A method according to any one of claims 15 to 20, wherein the source of zinc is selected from the oxide, halide, sulphate and nitrate thereof.

22. A method according to any one of claims 15 to 21, wherein the source of alkali metal ions is selected from hydroxides and neutral salts thereof.

23. A method according to any one of claims 17 to 22, wherein the structure directing compound provides a source of tetraalkylammonium ions.

24. A method according to any one of claims 17 to 23, wherein the components are present in respective amounts such as to provide, for the reaction, the following proportions

| | |
|---|---|
| $SiO_2/Al_2O_3$ | 1-100 |
| $SiO_2/ZnO$ | 2-500 |
| $SiO_2/M_2O$ | 0.2-10 |
| $H_2O/SiO_2$ | 5-200 |
| $OH^-/SiO_2$ | 0.2-10 |
| $OH^-/H_2O$ | 0.01-0.5 |
| $SiO_2/TMA^+$ | 0-50 |

wherein M is at least one alkali metal ion.

25. A method according to any one of claims 15 to 24, wherein the reaction product has a faujasite structure and the components are present in respective amounts such as to provide, for the reaction, the following proportions:

| | |
|---|---|
| $SiO_2/AlO_3$ | 2-20 |
| $SiO_2/ZnO$ | 10-100 |
| $SiO_2/Na_2O$ | 1-2.5 |
| $H_2O/SiO_2$ | 8-30 |
| $OH^-/SiO_2$ | 0.2-1 |
| $OH^-/H_2O$ | 0.02-0.1 |

26. A method according to any one of claims 15 to 24, wherein the reaction product has a zeolite P structure and the components are present in respective amounts such as to provide, for the reaction, the following proportions:

| | |
|---|---|
| $SiO_2/AlO_3$ | 1.5-5 |
| $SiO_2/ZnO$ | 4-200 |
| $SiO_2/Na_2O$ | 0.3-1 |
| $H_2O/SiO_2$ | 35-150 |
| $OH^-/SiO_2$ | 2-5 |
| $OH^-/H_2O$ | 0.05-0.2 |

**27.** A method according to any one of claims 17 to 24, wherein the reaction product has an offretite structure and the compounds are present in respective amounts such as to provide, for the reaction, the following proportions:

| | |
|---|---|
| $SiO_2/Al_2O_3$ | 10-50 |
| $SiO_2/ZnO$ | 20-250 |
| $SiO_2/Na_2O$ | 1-4 |
| $Na_2O/K_2O$ | 1.5-6 |
| $H_2O/SiO_2$ | 8-30 |
| $OH^-/SiO_2$ | 0.5-2 |
| $OH^-/H_2O$ | 0.03-1.2 |
| $SiO_2/TMA^+$ | 5-25 |

**28.** A method of preparing a zeolite having a free aperture main channel of a size > 2.2Å, a Si/Al ratio < 124/1 and zinc in the framework structure which comprises reacting a zeolite having a free aperture main channel of a size > 2.2Å and a Si/Al ratio < 124/1 with a compound capable of removing aluminium or silicon from the framework structure and providing zinc ions for introduction of zinc into the framework structure in place of the aluminium or silicon.

**29.** A method according to claim 28, wherein the said reagent is an alkali metal zincate in a strongly alkaline solution of a concentration of at least 0.1M in $OH^-$.

**30.** A method according to claim 28, wherein the $OH^-$ concentration is at least 1M.

**31.** A method according to any one of claims 28 to 30, wherein the reaction is carried out by stirring a suspension comprising the reactants at a temperature of at least 80°C for at least 3 hours.

# Fig.1.

INTENSITY/ ARBITRARY UNITS

*a*

*b*

*c*

RADIUS/Å

RADIUS/Å

RADIUS/Å

FOURIER TRANSFORMS OF ZINC K-EDGE EXAFS SPECTRA OF
a) ZNS-5; b) SODIUM ZINCOSILICATE $Na_2ZnSiO_4$; c) ZINC OXIDE ZnO

EP 0 476 901 A2